# EUROPEAN PATENT SPECIFICATION

(11) **EP 4 650 395 B1**
(45) Date of publication and mention of the grant of the patent: **11.11.2026**
(21) Application number: 24176236.8
(22) Date of filing: 16.05.2024
(51) Int. Cl.: C08K 9/04, C08K 3/04, C08K 5/372, C08L 7/00, C09C 1/56, C09C 3/08

(54) **FUNCTIONALIZED CARBON BLACK AND USE THEREOF IN VULCANIZABLE RUBBER COMPOSITIONS**
FUNKTIONALISIERTER RUSS UND DESSEN VERWENDUNG IN VULKANISIERBAREN KAUTSCHUKZUSAMMENSETZUNGEN
NOIR DE CARBONE FONCTIONNALISÉ ET SON UTILISATION DANS DES COMPOSITIONS DE CAOUTCHOUC VULCANISABLES

(43) Date of publication of application: 19.11.2025
(73) Proprietor: Orion Engineered Carbons IP GmbH & Co. KG, 40789 Monheim (DE)
(72) Inventor: Westenberg, Hauke, 50321 Brühl (DE)
(74) Representative: f & e patent

(56) References cited:
- WO-A2-96/37547
- CN-A- 109 111 604
- US-A- 3 293 321
- US-A1- 2005 034 629
- US-A1- 2022 363 864
- US-B1- 6 627 686

## Description

### TECHNICAL FIELD

The present disclosure relates to functionalized carbon blacks, related vulcanizable rubber compositions and articles made therefrom as well as respective preparation processes. More particularly, the disclosure concerns a functionalized carbon black obtainable by treating an oxidized carbon black having carboxylic acid functionality with a certain type of amino-functional sulfur-containing functionalizing agent. The functionalized carbon blacks are particularly useful for obtaining rubber products with reduced hysteresis and at the same time enhanced abrasion resistance such as in tire applications.

### TECHNICAL BACKGROUND

Carbon blacks are included in many rubber-based compounds, for example for modifying their color, mechanical, electrical, and/or processing properties. Carbon blacks are for instance commonly added to rubber compositions used to fabricate tires or components thereof to impart electrically dissipative properties to the insulating matrix. At the same time, carbon black additives affect the mechanical and elastic properties, such as stiffness, abrasion resistance and hysteresis, which affect to a great extent the performance of the resulting tire, e.g. in terms of its rolling resistance and durability. Herein, carbon blacks tend to form networks in the matrix via strong filler-filler interactions, which are the main source of heat-build up in the rubber component. Due to increasing regulatory provisions and environmental strains there is an increasing demand for energy-saving tires with a low rolling resistance. At the same time other performance parameters such as grip, traction and durability shall not be adversely affected. This represents often competing requirements.

One option for reducing the energy being lost in form of heat during deformation of a rubber material, which is reflected by a lower value of hysteresis, resides in reducing the filler-filler interactions by increasing the interactions of the carbon black filler with the rubber matrix. The hysteresis may also be reduced by reducing the carbon black loading and/or increasing the particle size of the carbon black. However, this may concomitantly degrade e.g. the electrically dissipative properties and/or the mechanical properties such as abrasion resistance, fracture resistance or chipping resistance.

Alternatively, there have been developments to chemically modify the rubber material and/or the carbon black filler in order to strengthen the filler-rubber interactions.

For example, US patent 5,248,722 describes elastomeric compositions with reduced rolling resistance in tire tread applications by utilizing terminally functionalized polymers in combination with acid-functional oxidized carbon black. The terminally functionalized polymers however are not readily available and need to be prepared in a dedicated step by reacting a tin or nitrogen containing compound with a polymer prepared by polymerization of at least one diene monomer and optionally one or more vinyl substituted aromatic monomers.

According to WO 2011/028337 the use of surface-treated carbon blacks in conjunction with a functionalized SBR polymer having functionalization in terms of oxygen-containing groups such as carboxylic acid or hydroxyl groups along the chain enhances carbon black-elastomer interaction and yields reductions in hysteresis and benefits in wet traction relative to the use of conventional carbon black containing compounds. Again, this approach however requires the use of specialty polymeric materials.

EP 3 339 364 proposes to utilize an oxidized carbon black in conjunction with a polymeric amine having a primary amine functionality such as a polyethyleneimine to obtain rubber compounds with improved hysteresis for tires with low rolling resistance. The abrasion resistance is however somewhat degraded in the resulting rubber compounds.

US 2022/0363864 A1 relates to a functionalized carbon black obtained by treating an oxidized carbon black with a sulfur-containing amine or a salt thereof, specifically cystamine, which is commercially available in stabilized form as hydrogen chloride adduct. The functionalized carbon black is useful for obtaining rubber compounds with reduced hysteresis and somewhat improved abrasion resistance. It would however be desirable to further improve abrasion resistance without adversely affecting hysteresis or other relevant properties. Moreover, basic metal oxides and/or hydroxides such as magnesium oxide and calcium hydroxide are added as auxiliary agents to neutralize and prevent vaporization of the hydrogen chloride component of the cystamine acid adduct. However, use of such auxiliary agents adds to complexity and costs and may adversely affect properties of the resulting rubber composition.

It would be desirable to efficiently provide rubber compounds which exhibit improved hysteresis and at the same time significantly enhanced abrasion resistance, e.g. for the production of tires with a low rolling resistance and good durability. The remaining mechanical properties of such rubber compound should be suitable for tire applications.

Accordingly, it is an objective of the present invention to provide a functionalized carbon black that can impart the above-mentioned properties to rubber compounds alleviating or avoiding the disadvantages of the prior art. Functionalization of the carbon blacks should be achievable in an efficient and economic manner making use of readily available components and processing techniques, if possible, without a need for auxiliary agents. The present invention aims to provide vulcanizable rubber compositions that yield at the same time improved hysteresis and significantly enhanced abrasion resistance suitable for the production of tires.

### SUMMARY OF INVENTION

It has now surprisingly been found that the above objective can be achieved by a functionalized carbon black obtained by treating an oxidized carbon black comprising carboxylic acid groups in an amount of at least 50 µmol/g with an amino-functional aromatic polysulfide compound.

The functionalized carbon blacks of the present invention can be obtained by a process comprising:
(A) providing an oxidized carbon black comprising carboxylic acid groups in an amount of at least 50 µmol/g,
(B) contacting the oxidized carbon black with an amino-functional aromatic polysulfide compound, and
(C) subjecting the resulting mixture to conditions at which the oxidized carbon black reacts with the amino-functional aromatic polysulfide compound.

Herein, the functionalized carbon blacks according to the invention may be treated with the amino-functional aromatic polysulfide compound in-situ during preparation of a vulcanizable rubber composition or separately, for example to obtain the functionalized carbon black material as such.

The present invention accordingly also concerns a vulcanizable rubber composition comprising:
(i) a vulcanizable rubber component,
(ii) an oxidized carbon black comprising carboxylic acid groups in an amount of at least 50 µmol/g, and
(iii) an amino-functional aromatic polysulfide compound,
or
(i) a vulcanizable rubber component, and a functionalized carbon black according to the present invention formed from the oxidized carbon black
(ii) and the amino-functional aromatic polysulfide compound (iii).

The present invention also relates to a process for preparing a vulcanizable rubber composition. The process comprises:
contacting an oxidized carbon black comprising carboxylic acid groups in an amount of at least 50 µmol/g with an amino-functional aromatic polysulfide compound, and
subjecting the resulting mixture to conditions at which the oxidized carbon black reacts with the amino-functional aromatic polysulfide compound to form a functionalized carbon black;
wherein a vulcanizable rubber component is mixed with the oxidized carbon black and the amino-functional aromatic polysulfide compound or the functionalized carbon black derived therefrom before, during and/or after subjecting the mixture to conditions at which the oxidized carbon black reacts with the amino-functional aromatic polysulfide compound.

Also within the scope of the present invention are articles prepared from the vulcanizable rubber compositions of the present invention.

Moreover, the present invention generally relates to use of an amino-functional aromatic polysulfide compound for surface modification of an oxidized carbon black and/or as coupling agent in carbon black containing vulcanizable rubber compositions.

The functionalized carbon blacks according to the invention can be obtained from commercially available ingredients using common processing techniques in an efficient manner at low costs. Specifically, amino-functional aromatic polysulfide compounds commercially available as such can be employed without a need for auxiliary agents such as basic metal oxides or hydroxides. The functionalized carbon blacks have surprisingly been found to impart favorable combinations of properties to rubber compounds to which they are added to or in which they are formed, and may in particular yield at the same time reduced hysteresis and significantly enhanced abrasion resistance, superior to corresponding non-functionalized carbon blacks as well as other functionalized carbon blacks such as those functionalized with an amino-functional aliphatic compound such as cystamine. This renders the functionalized carbon blacks of the present invention particularly interesting for the production of energy-saving tires.

Without intending to be bound by any theory, it is believed that the use of an amino-functional aromatic polysulfide compound by its polyfunctionality, i.e. polysulfide functionality, aromatic functionality and amine functionality, enables to form strong interactions, e.g. by intermolecular forces, covalent bonds and/or hydrogen bonds, to oxidized carbon blacks as a carbonaceous material, which have suitably high amount of polar carboxylic acid groups at their surface, on the one hand and vulcanizable rubber components, which generally contain vulcanizable moieties such as ethylenically unsaturated groups having an affinity towards polysulfide moieties, on the other hand. Thus, an effective coupling of the functionalized carbon blacks to the rubber component can be achieved and the filler-filler interactions be efficiently reduced resulting in rubber compounds with low hysteresis and excellent abrasion resistance and durability.

The present invention is thus also drawn to the use of an amino-functional aromatic polysulfide compound in carbon black containing vulcanizable rubber compositions for reducing the loss factor tan δ (e.g. measured at 60°C) and/or reducing the heat build-up and/or increasing the bound rubber content and/or enhancing the abrasion resistance compared to a corresponding carbon black containing vulcanizable rubber composition not containing the amino-functional aromatic polysulfide compound or functionalized carbon black derived therefrom.

These and other optional features and advantages of the present invention are described in more detail in the following description.

### DETAILED DESCRIPTION

All parts, amounts, concentrations etc. referred to herein are by weight, unless specified otherwise.

As mentioned above, the present invention relates to a functionalized carbon black obtained by treating an oxidized carbon black with an amino-functional aromatic polysulfide compound.

A "carbon black" as referred to herein is a material composed substantially, e.g. to more than 80 wt.%, or 90 wt.% or more, or 95 wt.% or more, based on its total weight, of carbon that is produced by controlled partial pyrolysis from one or more hydrocarbon precursors. Different industrial processes are known for the production of carbon black materials such as the furnace process, gas black process, channel black process, acetylene black process, thermal black process or lamp black process. The production of carbon blacks is per se well known in the art and for example outlined in J.-B. Donnet et al., "Carbon Black: Science and Technology", 2nd edition, therefore being not described herein in more detail. The carbon black used in the practice of the present invention can also comprise a mixture of two or more different carbon black grades.

The term "oxidized carbon black" as used herein refers to a carbon black that, unlike non-oxidized carbon blacks, has a notable oxygen content. The degree of oxidation of the oxidized carbon black used in the practice of the invention can vary. For example, oxidized carbon blacks that can be used according to the present invention can have an oxygen content of 0.5 wt.% or more, such as 1 wt.% or more, or 2 wt.% or more, or 5 wt.% or more, or 10 wt.% or more, based on the total weight of the oxidized carbon black material. Typically, the oxygen content does not exceed 20 wt.%, based on the total weight of the oxidized carbon black material. An oxidized carbon black used according to the present invention may have an oxygen content in a range between any of the above-mentioned values. For example, the oxidized carbon black can contain from 0.5 wt. % to 20 wt.%, or from 1 wt.% to 15 wt. %, or from 2 wt.% to 10 wt.%, or from 2 wt.% to 5 wt.% of oxygen, based on the total weight of the oxidized carbon black material.

An oxidized carbon black can be provided by producing a carbon black material under oxidizing conditions. For example, in the gas black process feedstock oil is heated in a vaporizer and the resultant vapors are carried by a hydrogen-rich gas into a gas tube that is fitted with a multiplicity of burners. The individual flames impinge on the surface of a water-cooled drum, where formed carbon black is deposited. As a result of contact with oxygen at high temperatures during the production process, significant amounts of oxygen-containing functional groups are formed on the surface of the gas black particles, and likewise for channel blacks. Oxidized carbon blacks can also be obtained by subjecting a carbon black to an oxidative aftertreatment. Provision of an oxidized carbon black can thus comprise subjecting an as-produced carbon black, e.g. carbon black produced by any one of the above-mentioned carbon black production processes, such as a furnace black, thermal black or acetylene black, to an oxidative aftertreatment. Hence, an "oxidized carbon black" as used herein can in particular mean a carbon black that has been subjected to an oxidative aftertreatment and thus comprises oxygen-containing functional groups. The oxidative aftertreatment can be accomplished in any manner known for the oxidation of carbon blacks, as for example disclosed in US patents no. 6,120,594 and US 6,471,933 or WO 2023/099695 A1. The oxidative aftertreatment generally comprises oxidizing the as-produced carbon black with an oxidizing agent. The oxidative aftertreatment can for example be accomplished by treatment with an oxidizing agent such as oxygen gas, ozone, NOₓ, peroxides such as hydrogen peroxide, persulfates such as sodium and potassium persulfates, hypohalites such as sodium hypochlorite, transition metal-containing oxidants such as permanganate salts, osmium tetroxide, chromium oxides, ceric ammonium nitrates, or oxidizing acids such as nitric acid or perchloric acid, and mixtures or combinations thereof or oxidation followed by treatment with a base, or chlorination followed by treatment with a base. According to the present disclosure, the oxidized carbon black can be provided by an oxidative aftertreatment, which may in particular utilize a gaseous oxidizing agent such as ozone, oxygen, air, NOₓ or a mixture or combination thereof.

An oxidized carbon black generally comprises oxygen-containing functional groups. The oxygen-containing functional groups can in particular be present at the surface of carbon black particles. The oxygen-containing functional groups can be exemplified, but are not limited to, quinone, carboxyl, phenol, lactol, lactone, and ketone groups. Carboxylic acid groups on the surface of the carbon black particles are herein believed to be particularly favorable for forming strong interactions with an amino-functional aromatic polysulfide compound due to the capability of these polar groups of forming relatively strong bonds e.g. by salt formation, formation of hydrogen bonds or reaction forming e.g. covalent amide bonds. The oxidized carbon black used according to the present invention therefore contains carboxylic acid functionality. The oxidized carbon black used according to the present invention comprises carboxylic acid groups in an amount of at least 50 µmol per g carbon black. The oxidized carbon black can for example comprise carboxylic acid groups in an amount of 100 µmol/g or more, such as 150 µmol/g or more, or 200 µmol/g or more. The oxidized carbon black used according to the present invention can for example comprise carboxylic acid groups in an amount of up to 2,000 µmol/g, such as 1,500 µmol/g or less, or 1,000 µmol/g or less, or 800 µmol/g or less, or 500 µmol/g or less, or 300 µmol/g or less. The oxidized carbon black used according to the present invention may comprise carboxylic acid groups in an amount in a range between any of the above-mentioned values. The oxidized carbon black can for example comprise carboxylic acid groups in an amount of from 50 µmol/g to 2,000 µmol/g, or from 100 µmol/g to 1,000 µmol/g, or from 200 µmol/g to 800 µmol/g. Typically, the oxidized carbon black used according to the present invention comprises 100 µmol/g to 500 µmol/g of carboxylic acid groups. As used herein "carboxylic acid groups" refers to titratable carboxylic acid groups. The amount of carboxylic acid groups can be determined by titration as set forth in the experimental section below.

The oxidized carbon black used according to the present invention is typically acidic, i.e. has a pH of less than 7. The pH can be determined according to ASTM D1512-21 (Test Method B - Sonic Slurry). The oxidized carbon black can for example have a pH of less than 7, such as 6.5 or less, or 6 or less, or 5.5 or less, or 5 or less, or 4.5 or less, or 4 or less. The oxidized carbon black can for example have a pH of 1 or more, such as 1.5 or more, or 2 or more, or 2.5 or more. The pH of the oxidized carbon black can be in a range between any of the recited values, such as in a range from 1 to 6, or from 2 to 5, or from 1.5 to 4.

The oxidized carbon black that is functionalized according to the present invention can be characterized by a content of volatiles. The content of volatiles can be determined by heating to 950°C according to DIN 53552:1977. The oxidized carbon black or functionalized carbon black derived therefrom can for example have a volatile content of 1 wt.% or more, such as 1.5 wt.% or more, or 2 wt.% or more, or 3 wt.% or more, or 4 wt.% or more, or 5 wt.% or more, or 6 wt.% or more, based on the total weight of the oxidized carbon black. The oxidized carbon black or functionalized carbon black derived therefrom can for example have a volatile content of 25 wt.% or less, such as 20 wt.% or less, or 15 wt.% or less, or 10 wt.% or less, or 8 wt.% or less, based on the total weight of the oxidized carbon black. The oxidized carbon black or functionalized carbon black derived therefrom may have a volatile content in a range between any of the recited values, such as in a range from 1 wt.% to 25 wt.%, or from 2 wt.% to 15 wt.%, or from 4 to 10 wt.%, based on the total weight of the oxidized carbon black. Preferably, the oxidized carbon black or functionalized carbon black derived therefrom has a volatile content of from 4 to 10 wt.%.

The oxidized carbon black that is functionalized according to the present invention can be characterized by a specific surface area. For example, the oxidized carbon black or functionalized carbon black derived therefrom can have a BET surface area of 30 m²/g or more, such as 50 m²/g or more, or 80 m²/g or more, or 100 m²/g or more, or 150 m²/g or more, or 200 m²/g or more. The oxidized carbon black or functionalized carbon black derived therefrom can for example have a BET surface area of 1,000 m²/g or less, such as 800 m²/g or less, or 700 m²/g or less, or 600 m²/g or less, or 500 m²/g or less, or 400 m²/g or less, or 300 m²/g or less. The oxidized carbon black or functionalized carbon black derived therefrom may have a BET surface area in a range between any of the recited values, such as in a range from 30 to 1,000 m²/g, or from 50 to 700 m²/g, or from 100 to 300 m²/g. The BET surface area can be measured by nitrogen adsorption according to ASTM D6556-21.

The oxidized carbon black that is functionalized according to the present invention can in addition or alternatively be characterized by a statistical thickness surface area (STSA). The statistical thickness surface area (STSA) can be determined according to ASTM D6556-21. The oxidized carbon black or functionalized carbon black derived therefrom can for example have a STSA of 20 m²/g or more, such as 30 m²/g or more, or 50 m²/g or more, or 60 m²/g or more, or 80 m²/g or more, or 90 m²/g or more, or 100 m²/g or more. The oxidized carbon black or functionalized carbon black derived therefrom can for example have a STSA of 500 m²/g or less, such as 400 m²/g or less, or 300 m²/g or less, or 250 m²/g or less, or 200 m²/g or less, or 150 m²/g or less. The oxidized carbon black or functionalized carbon black derived therefrom can have a STSA in a range between any of the above-mentioned values, for example, a STSA in a range from 20 to 500 m²/g, such as from 50 to 300 m²/g, or from 60 to 150 m²/g.

The oxidized carbon black that is functionalized according to the present invention can in addition or alternatively be characterized by its oil absorption number (OAN), which is a measure for the structure of the carbon black. The oil absorption number (OAN) can be measured according to ASTM D2414-18. The oxidized carbon black or functionalized carbon black derived therefrom can for example have an OAN of 30 mL/100 g or more, such as 50 mL/100 g or more, or 80 mL/100 g or more, or 100 mL/100 g or more, or 120 mL/100 g or more. The oxidized carbon black or functionalized carbon black derived therefrom can for example have an OAN of 250 mL/100 g or less, such as 200 mL/100 g or less, or 180 mL/100 g or less, or 160 mL/100 g or less, or 150 mL/100 g or less. The oxidized carbon black or functionalized carbon black derived therefrom can have an OAN in a range between any of the above-mentioned values, for example, in a range from 50 to 250 mL/100 g, or from 80 to 200 mL/100 g, or from 100 to 150 mL/100 g.

The oxidized carbon black that is functionalized according to the present invention can in addition or alternatively be characterized by its compressed oil absorption number (COAN). The COAN can be determined according to ASTM D3493-18. The oxidized carbon black or functionalized carbon black derived therefrom can for example have a COAN of 30 mL/100 g or more, such as 40 mL/100 g or more, or 50 mL/100 g or more, or 70 mL/100 g or more, or 80 mL/100 g or more, or 90 mL/100g or more, or 100 mL/100g or more. The oxidized carbon black or functionalized carbon black derived therefrom can for example have a COAN of 200 mL/100 g or less, such as 180 mL/100 g or less, or 160 mL/100 g or less, or 160 mL/100 g or less, or 150 mL/100 g or less, or 140 mL/100g or less, or 130 mL/100g or less, or 120 mL/100g or less. The oxidized carbon black or functionalized carbon black derived therefrom can have a COAN in a range between any of the above-mentioned values, for example, in a range from 40 to 200 mL/100 g, or from 70 to 150 mL/100 g, or from 80 to 130 mL/100 g.

The oxidized carbon black used according to the present invention can comprise, without being limited thereto, an oxidized standard rubber reinforcing carbon black according to ASTM D1765-13 classification. Preferably the oxidized carbon black comprises an oxidized furnace black. The oxidized carbon black according to the invention can comprise for example a carbon black grade commercialized by ORION Engineered Carbon GmbH, e.g. under the tradenames ECORAX^{®}, CORAX^{®} or PRINTEX^{®}, subjected to an oxidative aftertreatment as set forth above.

As mentioned above the oxidized carbon black is treated with an amino-functional aromatic polysulfide compound to obtain a functionalized carbon black. Accordingly, the treatment leads to a chemical change of the oxidized carbon black by the amino-functional aromatic polysulfide imparting functionalities derived from the treatment agent such as polysulfide and/or amine groups or derivatives thereof to the oxidized carbon black. The functionalization can be based on different types of interaction between the oxidized carbon black and amino-functional aromatic polysulfide such as an adsorption or absorption of the amino-functional aromatic polysulfide at the surface or in the bulk of the carbon black, intermolecular bonds such as hydrogen bonds or salt formation or the formation of covalent bonds such as amide bonds.

The chemical nature of the functional groups present on the surface of the particles of the functionalized carbon black according to the invention is not particularly limited and can comprise those mentioned above with respect to the oxidized carbon black and those that may be introduced by the amino-functional aromatic polysulfide compound, e.g. by a bonding of the amino-functional aromatic polysulfide compound to the oxidized carbon black or a reaction of functional groups of the amino-functional aromatic polysulfide compound with functional groups of the oxidized carbon black. For example, carboxylic acid groups of the oxidized carbon black may react at elevated temperatures with amine groups of the amino-functional aromatic polysulfide compound under the formation of amide bonds. Hence, a covalent amide bond may be formed between oxygen-containing groups of the oxidized surface of the oxidized carbon black and the amine functionality of the sulfur-containing amine component. For example, the amine group(s) of the amino-functional aromatic polysulfide compound may react with carboxylic acid groups residing on the surface of the oxidized carbon black particles. The degree of functionalization, i.e. the number of chemical functionalities per unit mass carbon black, of the functionalized carbon black according to the invention can vary. Preferably, a residue of the amino-functional aromatic polysulfide compound is thus bound to the oxidized carbon black by a covalent bond, such as an amide bond, in the functionalized carbon black.

As mentioned, the oxidized carbon black material is treated with an amino-functional aromatic polysulfide compound to obtain the functionalized carbon black according to the present invention. The amino-functional aromatic polysulfide compound that can be used according to the present invention can comprise any compound that comprises at least one aromatic group, at least one polysulfide moiety and one or more amine group(s). The amino-functional aromatic polysulfide compound can optionally comprise beside the at least one aromatic group, at least one polysulfide moiety and one or more amine group(s), further chemical functionalities such as for example oxygen-containing groups. Preferably, it is however free of such additional functional groups. As used herein, "amine group" refers to a group of the general structure "-NR₂", wherein R is each individually selected from hydrogen and an organic substituent such as an alkyl, aryl or aralkyl group. As used herein, a "polysulfide" moiety means a moiety of the general structure -Sₓ-, where x is an integer greater than 1, such as in a range from 2 to 100, or from 2 to 20, or from 2 to 10, for example 2, 3, 4, 5, 6, 7, 8, 9 or 10. This covers accordingly oligosulfides such as disulfides, trisulfides and tetrasulfides, as well as higher polysulfides. Further, as used herein "aromatic" or "aromatic group" refers in accordance with its general meaning to an unsaturated cyclic moiety having a delocalized π electron system. An aromatic group may contain one or more rings. The rings can comprise carbon and optionally one or more heteroatoms such as nitrogen (N), oxygen (O), sulfur (S), boron (B), or any combination thereof. "Aromatic" accordingly covers both aryl and heteroaryl ring systems. Illustrative five membered aromatic groups can include, for example, furan, thiophene, pyrrole, imidazole, triazole, dithiole, oxathiole, isoxazole, oxazole, thiazole, isothiazole, and oxadizole. Illustrative six membered aromatic groups can include, for example phenyl, pyridine, pyridazine, pyrimidine, pyrazine, triazine, and oxazine. Illustrative double ring aromatics include, for example, naphthalene, tetrahydronapthalene, indene, isoindene, benzofuran, isobenzofuran, benzothiophene, indole, quinolone, isoquinoline, quinazoline, anthracene, and phenanthrene for example. The ring system may optionally be substituted by organyl groups such as aliphatic hydrocarbyl groups like alkyl, as for example in case of tolyl. Typically, the aromatic group(s) present in the amino-functional aromatic polysulfide compound of the present invention comprise an aryl group, such as C₆-C₂₀ aryl, or C₆-C₁₂ aryl, preferably phenyl, which may optionally be substituted as described before.

The amino-functional aromatic polysulfide compound can comprise a monomeric or a polymeric organic compound as well as mixtures or combinations thereof. Typically, it comprises a monomeric organic compound. A monomeric organic compound differs from organic polymeric compounds as the latter are formed by a plurality of structural units (mers) and exhibit a substantial molecular weight. The amino-functional aromatic polysulfide compound can on the contrary have a relatively low molecular weight, which may facilitate mobility and homogeneous distribution of the functionalizing agent. The amino-functional aromatic polysulfide compound used according to the present invention can for example have a molecular weight of 1,000 g/mol or less. Typically, it has a molecular weight of 500 g/mol or less, such as 400 g/mol or less, or 300 g/mol or less, or 250 g/mol or less.

The amino-functional aromatic polysulfide compound used according to the present invention can be characterized by its amino functionality. It can for example comprise four or less than four amino groups per molecule. Typically, the amino-functional aromatic polysulfide compound used according to the present invention comprises three or less than three amino groups per molecule. Preferably, it comprises one or two amino groups per molecule. The amino functionality of the amino-functional aromatic polysulfide compound can in particular be provided by one or more amine groups each individually selected from primary amine groups and secondary amine groups. A primary amine group refers to a group of the general structure "-NH₂" and a secondary amine group refers to a group of the structure "-NHR", wherein R is an organic substituent such as an alkyl, aryl or aralkyl group. The primary and/or secondary amine group(s) may be unblocked or blocked. Blocking may for example be achieved by any protective group conventionally known in the art such as, for example, in the form of a carbamate. According to the present invention the amino-functional aromatic polysulfide compound is typically not used in the form of a salt or adduct. In other words, the amine group(s) are typically not in the corresponding protonated form as ammonium groups. The use of basic auxiliary ingredients such as metal oxides or hydroxides can thus be avoided.

The amino-functional aromatic polysulfide compound used according to the present invention can in particular comprise a polysulfide moiety and one or more aromatic organic group(s) bound to the polysulfide moiety. The polysulfide moiety can be an oligosulfide such as disulfide, trisulfide or tetrasulfide moiety, or a polysulfide moiety -Sₓ- with greater x as indicated above. The one or more aromatic organic group(s) can be bound directly or indirectly via a spacer, such as an alkylene (-CₙH₂ₙ-) group, with n as an integer e.g. in a range from 1 to 6, to the polysulfide moiety. The aromatic organic group(s) can be any aromatic organic group(s), such as those indicated above. The aromatic organic group(s) preferably comprise an aryl group, such as C₆-C₂₀ aryl, or C₆-C₁₂ aryl, more preferably phenyl, which may optionally be substituted as described before. In particular, at least one of the aromatic organic group(s) can have one or more amino group(s), such as primary amine group and/or secondary amine group as described above. The amino group(s) may be part of or bound directly to the aromatic ring system. Alternatively, the amino group(s) can be bound to a substituent of the aromatic ring system such as a hydrocarbyl substituent like an alkyl group having one or more hydrogen replaced by an amino group. In case an aromatic organic group is bound to only one end of the polysulfide moiety the other end of the polysulfide moiety can be terminated in any manner, for example by hydrogen or a non-aromatic organic group such as an alkyl group.

According to the present invention the amino-functional aromatic polysulfide compound can in particular have a structure corresponding to the following formula (I)

R¹-Sₓ-R² (I).

Herein, x is an integer of at least 2, such as in a range from 2 to 10, or from 2 to 6, or from 2 to 4. Preferably, the integer x is equal to 2. R¹ and R² can each individually be selected from hydrogen and substituted or unsubstituted hydrocarbyl, such as C₁-C₂₀ hydrocarbyl. At least one of R¹ and R² comprises one or more aromatic organic group(s) as described before, for example substituted or unsubstituted aryl, such as C₆-C₂₀ aryl. Moreover, in the compound of formula (I) at least one of, such as both of, R¹ and R², comprises one or more amino group(s), such as primary amine group and/or secondary amine group as described above, as substituent(s). Preferably, R¹ and R² are each individually selected from substituted or unsubstituted aryl, such as C₆-C₂₀ aryl, or C₆-C₂₀ aryl, preferably phenyl, wherein at least one of R¹ and R² comprises one or more amino group(s) as substituent(s), preferably wherein both of R¹ and R² each comprise one or more amino group as substituent(s), such as a primary and/or secondary amine group as described above. The amino group(s) is herein preferably directly bound as substituent to the aromatic ring system of R¹ and R².

Particularly preferred amino-functional aromatic polysulfide compounds useful according to the present invention have a structure according to above formula (I), wherein x is an integer in the range of 2 to 4, preferably 2, and R¹ and R² are each individually C₆-C₂₀ aryl, such as C₆-C₁₂ aryl, preferably phenyl, substituted by one or more, such as one, amino group.

Amino-functional aromatic polysulfide compounds that can be used in the present invention can be illustrated, without being limited thereto, for example by bis(2-aminophenyl) disulfide, bis(3-aminophenyl) disulfide, bis(4-aminophenyl) disulfide, or a mixture or combination of any of the foregoing. Amino-functional aromatic polysulfide compounds for use in the present invention as described above are commercially available as such without a need for stabilization e.g. in the form of an adduct with an acid.

The sulfur functionality imparted to the oxidized carbon black by treatment with the amino-functional aromatic polysulfide compound can be utilized to establish strong chemical interactions of the carbon black particles to vulcanizable rubber components. For instance, the polysulfide moiety can form under appropriate reaction conditions covalent bonds such as sulfur bridges to reactive sites of the vulcanizable rubber component such as ethylenically unsaturated moieties.

The functionalized carbon black or its precursor according to the invention can be treated prior, during or after the treatment with the amino-functional aromatic polysulfide compound with one or more other chemical components. By this means, some or all of the particles of the functionalized carbon black can comprise other or additional chemical functionalities on their surface. For example, the oxidized carbon black utilized for preparing the functionalized carbon black can be treated with a chemical that activates, i.e. increases the reactivity of, oxygen-containing functional groups on the surface of the carbon black particles. Such an additional treatment can increase the yield or the reaction rate of a subsequent chemical treatment step such as in the treatment with the amino-functional aromatic polysulfide compound. More particularly, the carboxylic acid groups on the surface of the oxidized carbon black particles can be treated with any chemical component known by those skilled in the art such that an (activated) ester or anhydride is obtained. Suitable (activated) esters or anhydrides are known to be more reactive to amines then the corresponding carboxylic acids and thus can increase the yield of amide functionalities in the treatment with the amino-functional aromatic polysulfide compound. The one or more further chemical components can also be applied together with the amino-functional aromatic polysulfide compound and may act as catalyst or coupling agent by forming an activated complex or a reactive intermediate thereby leading for example to an increased yield of the reaction product. Other chemical components may be applied to the functionalized carbon black or its precursor for delaying or slowing down a chemical reaction such as the reaction with the amino-functional aromatic polysulfide compound.

The optional one or more additional or other chemical functionalities introduced to the functionalized carbon black by treatment with one or more other chemical component can also be utilized to introduce an additional chemical reactivity of the functionalized carbon black to chemical groups other than amines. By this means, the functionalized carbon black can, for example, stronger interact with or can be bound by further chemical bonds to the rubber material or other components comprised in the respective carbon black-containing compound.

As mentioned above, the functionalized carbon black according to the present invention can be obtained by a process comprising (A) providing an oxidized carbon black, (B) contacting the oxidized carbon black with an amino-functional aromatic polysulfide compound, and (C) subjecting the resulting mixture to conditions at which the oxidized carbon black reacts with the amino-functional aromatic polysulfide compound. In said process, the amino-functional aromatic polysulfide compound and the oxidized carbon black material can each be as specified above.

The relative amount of the amino-functional aromatic polysulfide compound to the oxidized carbon black can vary. The amino-functional aromatic polysulfide compound can be applied in excess or in shortage based on the number of chemical functionalities of the applied carbon black available for reaction. Typically, the amino-functional aromatic polysulfide compound is used in an amount yielding an equimolar amount or excess of amine groups to the carboxylic acid groups of the oxidized carbon black. The amino-functional aromatic polysulfide compound can for example be used in an amount such that the equivalent ratio of amine groups of the amino-functional aromatic polysulfide compound to the carboxylic acid groups of the oxidized carbon black ranges from about 1:1 to about 5:1, preferably from about 1:1 to about 4:1, more preferably from about 1:1 to about 3:1, such as about 2:1. The amino-functional aromatic polysulfide compound can be added stepwise or all at once.

Contacting of the oxidized carbon black and the amino-functional aromatic polysulfide compound can be carried out by any means known in the art for bringing into contact two components. Typically, it comprises a mixing the oxidized carbon black and the amino-functional aromatic polysulfide compound, which can be conducted using any instrumentation conventionally applied for this purpose. Preferably, contacting the oxidized carbon black and the amino-functional aromatic polysulfide compound comprises forming an at least macroscopically homogenous mixture. Optionally a solvent or processing aid such as an oil or the like can be added prior to or while contacting the amino-functional aromatic polysulfide compound with the oxidized carbon black. The solvent can be chosen such that it dissolves the amino-functional aromatic polysulfide compound. During mixing in step (B) the temperature of the mixture remains typically below levels at which a reaction between the oxidized carbon black and the amino-functional aromatic polysulfide compound would occur, such as below 80°C or below 60°C. Mixing can for example be carried out at room temperature or slightly elevated temperature (e.g. up to 40°C). However, higher temperatures can be used as for example in the in-situ preparation described further below.

The mixture can optionally comprise further auxiliary ingredients in addition to the oxidized carbon black and the amino-functional aromatic polysulfide compound. For instance, the mixture can comprise substances acting as coupling agents or catalyst for the coupling reaction and/or for removing protecting groups, if present. In case the functionalized carbon black is provided with additional chemical functionalities as mentioned further above, corresponding reactants can be added prior or after contacting with the amino-functional aromatic polysulfide compound.

The reaction conditions in step (C) of said process can be chosen to enable the formation of amide bonds between the oxidized carbon black and the amino-functional aromatic polysulfide compound. Step (C) can for instance comprise heating the mixture to a temperature of at least 100°C, such as in the range from 100°C to 160°C, for a period of at least 1 min, such as 2-10 min. Heat can be applied by any conventional means such as by heating rods, heating plates or the like or by agitation at high rotor speeds, respectively high shear forces. Applying heat by agitation is especially advantageous if reaction is induced in-situ in the presence of a vulcanizable rubber component.

As previously mentioned, the reaction of the oxidized carbon black and the amino-functional aromatic polysulfide compound can be conducted in situ, i.e. in the presence of a vulcanizable rubber component, or the functionalized carbon black of the present invention can be formed separately and then compounded with a vulcanizable rubber component and suitable vulcanization agents to form a vulcanizable rubber composition according to the present invention. The in-situ route will be described in more detail below in the context of the preparation of the vulcanizable rubber compositions according to the invention.

The present invention accordingly also concerns a vulcanizable rubber composition comprising (i) a vulcanizable rubber component, (ii) an oxidized carbon black, and (iii) an amino-functional aromatic polysulfide compound. From the oxidized carbon black and the amino-functional aromatic polysulfide compound a functionalized carbon black of the present invention may thus be formed in-situ. Alternatively, the functionalized carbon black may be formed separately and then combined with the vulcanizable rubber component. In any case, the present invention thus relates also to a vulcanizable rubber composition that comprises vulcanizable rubber component (i) and a functionalized carbon black formed from the oxidized carbon black (ii) and the amino-functional aromatic polysulfide compound (iii).

The term "vulcanizable rubber composition" refers to a composition of a rubber component optionally with various further ingredients conventionally used in the art of rubber compounding that can be cured by vulcanization under formation of a vulcanizate. The terms "curable" and "vulcanizable" are used interchangeably throughout this description unless otherwise stated and refer to a chemical reaction linking polymer chains to each other by means of a cross-linker or vulcanizing agent.

The vulcanizable rubber component suitable for use in the vulcanizable rubber composition generally comprises one or more rubbers or elastomers containing olefinic unsaturation, i.e. diene-based rubbers or elastomers. The terms "rubber" and "elastomer" may be used interchangeably throughout this description unless otherwise stated. The rubber component may also comprise a mixture of the rubber containing olefinic unsaturation with other polymer materials containing no such unsaturation as for example thermoplastic or thermoset polymers or the like. Preferably, however, the rubber component only comprises one or more rubbers containing olefinic unsaturation. The phrases "rubber containing olefinic unsaturation" and "diene-based rubber" are used interchangeably and are intended to include both natural and synthetic rubbers or mixtures thereof. Natural rubber can be used in its raw form and in various processed forms conventionally known in the art of rubber processing. Without being limited thereto, synthetic diene-based rubber may be any rubber containing at least one diene-based monomer that alone or with other monomers constitutes the rubber. Exemplary diene-based rubber materials suitable in the practice of the invention include, but are not limited to natural rubber, emulsion-styrene-butadiene rubber, solution-styrene-butadiene rubber, polybutadiene, polyisoprene, ethylene-propylene-diene rubber (EPDM), butyl rubber and halogenated butyl rubber, acrylonitrile-butadiene rubber, hydrogenated acrylonitrile-butadiene rubber, polychloroprene, or any combination thereof. The rubber composition according to the present invention can also comprise one or more non-diene-based rubber materials. Exemplary non-diene-based rubber materials suitable in the practice of the invention include, but are not limited to, ethylene-propylene rubber (EPM), chlorinated polyethylene, chlorosulfonated polyethylene, acrylate rubber, ethylene-vinylacetate rubber, ethylene-acrylic rubber, epichlorohydrin rubber, silicone rubber, fluorosilicone rubber, fluorocarbon rubber or any combination thereof. Suitable rubbers also include functionalized rubbers and rubbers coupled to silicon or tin. For example, rubbers can be functionalized with functional groups like amine, alkoxy, silyl, thiol, thioester, thioether, sulfanyl, mercapto, sulfide or combinations thereof. The one or more functionalities can be primary, secondary or tertiary and can be located at one or both chain ends (e.g. α,ω-functionalization), pendant from the polymer backbone and/or provided within the chain of the polymer backbone. The rubber according to the invention can also be partially cross-linked. Thus, prior to use in the vulcanizable rubber composition, part of the polymer chains of the rubber material can be cross-linked either by means of a coupling agent or without. The polymeric material can furthermore be supplied in any form, typically however as bales or chips. Preferably, the rubber component comprises natural rubber or a mixture of natural and synthetic diene-based rubbers.

The vulcanizable rubber composition may comprise the oxidized carbon black or the functionalized carbon black derived therefrom in an amount of 10 phr or more, such as 20 phr or more, or 30 phr or more, or 40 phr or more, or 50 phr or more. The vulcanizable rubber composition can for example comprise the oxidized carbon black or the functionalized carbon black derived therefrom in an amount of up to 100 phr, such 90 phr or less, or 80 phr or less, or 70 phr or less. The vulcanizable rubber composition can comprise the oxidized carbon black or the functionalized carbon black derived therefrom in an amount in a range between any of the recited values, such as in a range from 10 phr to 100 phr, or from 20 phr to 80 phr, or from 30 phr to 70 phr. As used herein, the term "phr" refers to parts by weight of the recited respective material per 100 parts by weight of rubber or elastomer.

The vulcanizable rubber composition according to the invention can comprise the amino-functional aromatic polysulfide compound in an amount of 0.1 phr or more, such as 0.2 phr or more, or 0.3 phr or more, or 0.5 phr or more, or 0.8 phr or more, or 1 phr or more, or 1.2 phr or more, or 1.5 phr or more, or 2 phr or more, or 2.5 phr or more, or 3 phr or more. The vulcanizable rubber composition according to the invention can comprise the amino-functional aromatic polysulfide compound in an amount of 20 phr or less, such as 15 phr or less, or 10 phr or less, or 8 phr or less, or 7 phr or less, or 6 phr or less, or 5 phr or less, or 4 phr or less. The vulcanizable rubber composition can comprise the amino-functional aromatic polysulfide compound in an amount in a range between any of the recited values, such as in a range from 0.1 phr to 20 phr, or from 0.5 phr to 10 phr, or from 1 phr to 8 phr. Typically, the vulcanizable rubber composition comprises the amino-functional aromatic polysulfide compound in an amount of 0.5 to 10 phr, preferably from 1 to 6 phr, more preferably from 2 to 5 phr, such as about 3 phr. As used herein, the term "phr" refers to parts by weight of the recited respective material per 100 parts by weight of rubber or elastomer.

The vulcanizable rubber composition according to the present invention optionally may further comprise at least one vulcanizing agent able to induce cure of the rubber. Possible vulcanizing agents include any vulcanizing agents known from the art such as sulfur and sulfur donors. Sulfur donors suitable for the practice of the present invention include for example dithioalkanes, dicaprolactamsulfides, polymeric polysulfides, sulfur olefin adducts, thiurams and sulfonamides with at least two sulfur atoms in the sulfur bridges. Preferably elemental sulfur may be used. The vulcanizing agent can be present in an amount ranging from 0.5 to 8 phr, such as from 1 to 4 phr, in the vulcanizable rubber composition.

As mentioned before, use of a basic metal oxide and/or metal hydroxide can advantageously be avoided according to the present invention. The vulcanizable rubber composition can accordingly be substantially free or completely free of basic metal oxide and hydroxides, specifically oxides of alkaline metals or alkaline earth metals like Na₂O, K₂O, CaO or MgO, and hydroxides of alkaline metals or alkaline earth metals such as NaOH, Mg(OH)₂ or Ca(OH)₂. As used herein "substantially free" means that the recited components are not purposely added and may accordingly be present, if at all, as unintentional impurities in low amounts, such as less than 0.05 weight percent, or less than 0.01 weight percent, or less than 0.005 weight percent, or less than 0.001 weight percent, based on the total mass of the vulcanizable rubber composition.

The vulcanizable rubber composition may optionally comprise one or more further filler materials such as for example other carbon blacks, silica, organo-silica, carbon nanotubes, carbon fibers, graphite, metal fibers or the like. Carbon blacks useful in this respect can be exemplified by the ASTM-grade carbon blacks selected from the 100er to the 900er series as classified according to ASTM D1765.

The vulcanizable rubber composition according to the invention may further comprise other commonly known additives. Such additives include, for example, curing aids such as primary and secondary vulcanization accelerators, activators, and pre-vulcanization inhibitors, processing additives such as oils, resins in form of tackifying resins and plasticizers, softeners, pigments, waxes, peptizing agents and antiaging agents such as anti-oxidants and anti-ozonants. Useful as primary and secondary vulcanization accelerators are for example guanidines, dicarbamates, dithiocarbamates, thiurams, thioureas, 2-mercaptobenzothiazole, benzothiazole sulfonamides, aldehydeamines, amines, disulfides, thiazoles, xanthates, and sulfenamides. As specific examples it may be referred for instance to N-tert.-butyl-2-benzothiazyl sulfenamide commercially available under the tradename Rhenogran TBBS-80 from Rhein Chemie Additives and diphenylguanidine commercially available as Rhenogran DPG-80 from Rhein Chemie Additives. Suitable activators include combinations of zinc oxide or the like with a fatty acid like stearic, lauric, palmitic, oleic or naphthenic acid. Primary accelerators can be present in the composition in a total amount ranging from 0.05 to 4 phr. Secondary accelerators are typically employed in smaller amounts than primary accelerators and can be present in the composition in an amount ranging from 0.05 to 3 phr.

As it will be appreciated, the vulcanizable rubber compositions according to the invention can be utilized in various technical applications requiring rubber-based materials with reduced loss hysteresis, enhanced filler-rubber bonding and/or increased abrasion resistance. Accordingly, the invention also relates to an article made from or comprising the afore-mentioned vulcanizable rubber composition. Non-limiting examples of such articles are for instance tires, tire components such as tire treads or sidewalls, cable sheaths, tubes, drive belts, conveyor belts, roll coverings, shoe soles, sealing members, profile or damping elements. Due to an exceptional combination of low hysteresis and at the same time significantly enhanced abrasion resistance, the vulcanizable rubber composition according to the present invention can be particularly interesting for producing abrasion-resistant, fuel-saving tires or tire components with a reduced rolling resistance and heat build-up. Such tires include for example, without being limited thereto, truck tires, passenger tires, off-road tires, aircraft tires, agricultural tires, and earth-move tires.

As mentioned before, the vulcanizable rubber composition according to the invention can be obtained by a process in which the functionalized carbon black is produced ex-situ or in-situ., i.e. in the absence respectively presence of the vulcanizable rubber component. Thus, the present invention also relates to a process for preparing a vulcanizable rubber composition comprising contacting an oxidized carbon black with an amino-functional aromatic polysulfide compound, and subjecting the resulting mixture to conditions at which the oxidized carbon black reacts with the amino-functional aromatic polysulfide compound to form a functionalized carbon black, wherein a vulcanizable rubber component is mixed with the oxidized carbon black and the amino-functional aromatic polysulfide compound or the functionalized carbon black derived therefrom before, during and/or after subjecting the mixture to conditions at which the oxidized carbon black reacts with the amino-functional aromatic polysulfide compound.

In a preferred practice of the invention, the functionalized carbon black is formed in the presence of the vulcanizable rubber composition. Thus, the vulcanizable rubber component is preferably mixed with the oxidized carbon black and the amino-functional aromatic polysulfide compound before or during subjecting the mixture to conditions at which the oxidized carbon black reacts with the amino-functional aromatic polysulfide compound.

The process can be free of an addition of a basic metal oxide and/or a metal hydroxide such as the ones mentioned above during, before or after mixing the oxidized carbon black and the amino-functional aromatic polysulfide compound with the rubber component.

Mixing can be carried out such that the oxidized carbon black material, the amino-functional aromatic polysulfide compound, the vulcanizable rubber component, and any further optional components as such those mentioned above, if used, are at least partially mixed together. Preferably all components are completely mixed together such that an at least macroscopically homogenous mixture is obtained.

The process can comprise before mixing the vulcanizable rubber component with the oxidized carbon black and the amino-functional aromatic polysulfide compound, a step in which the vulcanizable rubber component is plasticized, for example, by means of agitation. To this end, the vulcanizable rubber component can be provided in an eligible instrument, such as an internal mixer, and can be agitated for 2 minutes or less, such as for 1 minute or less. Subsequently, the oxidized carbon black, the amino-functional aromatic polysulfide compound and potential further optional components can be added to the plasticized vulcanizable rubber component and can be mixed together as described above.

Mixing can be carried out using techniques and instrumentation conventionally known in the art of rubber processing. Mixing can be achieved, for example, by a mixer, a stirrer, a mill, a kneader, a machine using ultrasound, a dissolver, a shaker mixer, rotor-stator dispersing assemblies, or high-pressure homogenizers or a combination thereof. Preferably, a mixer with intermeshing or tangential rotor geometry is utilized.

Mixing can include, if needed, heating the components of the mixture to temperatures above room temperature. Preferably, however, mixing is carried out without providing extra heat to the mixture beside the heat which may be generated by the agitation process itself. The temperature generated from the agitation process can be utilized to subject the mixture to conditions at which the oxidized carbon black reacts with the amino-functional aromatic polysulfide compound to form a functionalized carbon black. The conditions during mixing can be chosen such that amide bonds between for example carboxyl groups of the oxidized carbon black and amine group of the amino-functional aromatic polysulfide compound are formed. Thereby, the temperature of the mixture is typically kept below 200°C, preferably, at about 150°C by gradually or stepwise modifying the rotor speed, if needed.

Mixing can be carried out such that the oxidized carbon black reacts with the amino-functional aromatic polysulfide compound under formation of a functionalized carbon black during homogenization with the rubber component and with optional further components, i.e. homogenization and reaction occur in a single mixing step. In a preferred practice of the invention, however, the oxidized carbon black, the amino-functional aromatic polysulfide compound, the rubber component and optional further components are at least macroscopically homogenized in a first mixing step and the thus obtained mixture is allowed to cool down to room temperature before subjecting the components of the mixture to a second mixing step. Depending on the specific mixing conditions during the two mixing steps, reaction between the oxidized carbon black and the amino-functional aromatic polysulfide compound may occur in the first and/or the second mixing step.

The duration of the first mixing step can vary. However, depending on the chemical nature of the components, mixing time can be critical. For example, some of the components can be sticky, in which case extensive mixing on the open mill should be avoided. Typically, the mixing time in the first step is below 10 minutes such as below 5 minutes, or below 3 minutes. The ejection temperature of the composition in the first mixing step is typically kept below 190°C, preferably, however, between 130°C and 160°C.

After the first mixing step, the resulting mixture can immediately be subjected to the second mixing step or can be stored in between the two steps. The mixture can for example be allowed to stand for a few minutes to months, such as for at least 60 minutes, or for at least 12 hours. Prior to the second mixing step, the mixture can be transferred to another mixing chamber and/or to another site, such as for example to a customer.

In the second mixing step the mixture is typically agitated using for example an internal mixer with intermeshing rotor geometry. Rotor speed can be in the range of 10 to 150 rpm, preferably of 30 to 100 rpm, which can lead to a heating of the mixture such that no additional heating source has to be applied. The duration of the second mixing step can be in the range of seconds to hours, such as for example from 1 minute or 5 minutes up to 2 hours or up to 30 minutes, such as in range from 5 to 10 minutes. The rotor speed can be adjusted during that time to keep the temperature of the mixture at a certain level, e.g. in a range from 120°C to 200°C or 140°C to 180°C, such as at about 150°C.

After the first, or if present, the second mixing step, the process for preparing a vulcanizable rubber composition further preferably comprises a step of adding sulfur or a sulfur donor or another vulcanization agent, and, if needed, one or more activators, one or more accelerators and further components conventionally used in the art of rubber compounding as mentioned above to the mixture. Subsequently, the composition is preferably mechanically agitated in order to achieve at least partial or preferably complete mixing of the composition. The mixing is typically carried out at temperatures residing between 10°C and 140°C, more typically between 80°C and 120°C, under constant agitation for less than 5 min, such as less than 3 min. The conditions, especially the rotor speed, can be chosen such that the temperature of the mixture containing the curing agents resides below 110°C.

The in this way obtained mixture can be cured, i.e. vulcanized. By this means, in addition to cross-linking of the polymer chains of the rubber material also a linkage of the functionalized carbon black particles to the rubber matrix can be achieved via the sulfur functionality introduced by the amino-functional aromatic polysulfide compound to the surface of the carbon black particles. This linkage is believed to increase the carbon black-elastomer interactions.

Curing can be carried out using conventional curing means and conditions known as such in the art of rubber processing. For example, curing of the vulcanizable rubber composition according to the invention can be carried out by subjecting the mixture to thermal curing conditions, e.g. to a temperature of 120-200°C for a time of 5 minutes to 3 hours. Curing can for instance be carried out in a curing press for example at a temperature in a range of 120°C to 180°C, for a time suitable to effect a desired degree of cure such as full cure, which can e.g. be determined by a torque measurement as described in the examples below, for example for 60 minutes or less, 30 minutes or less, or 20 minutes or less. The applied pressure can for example range between 120 and 150 bar, without being limited thereto.

The invention will now be further illustrated by the following Examples. It is to be understood that the Examples are included for the sake of illustration, and are not to be construed as limiting to the present invention. In particular, the sought scope of protection shall not be limited by the specific Examples disclosed hereinafter, but is rather to be given the full breadth of the appended claims including any equivalents thereof.

### EXAMPLES

All parts and percentages mentioned herein are based on weight, unless indicated otherwise.

### Used carbon black materials

As a reference, a non-oxidized furnace black, CORAX^{®} N234, which is commercially available from Orion Engineered Carbons GmbH and commonly employed as reinforcing filler for rubber compositions, was utilized.

For the purpose of the present invention, an oxidized carbon black was prepared by oxidizing CORAX^{®} N234 with ozone by the process described in WO2023/099695 A1.

Properties of the non-oxidized CORAX^{®} N234 reference carbon black and the used oxidized carbon black are summarized in Table 1.

**Table 1**

| | **Reference CB** | **Oxidized CB** |
|---|---|---|
| STSA [m²/g] | 113 | 117 |
| OAN [mL/100g] | 125 | 131 |
| COAN [mL/100g] | 100 | 104 |
| pH | 6-10 | 2.5 |
| Volatiles @ 950°C [%] | < 2 | 6.2 |
| Carboxylic acid groups [µmol/g] | < 50 | 231 |

### Applied methods for the characterization of the carbon blacks

The statistical thickness surface area (STSA) was determined according to ASTM D6556-21.

The oil absorption number (OAN) was measured according to ASTM D2414-18.

The oil absorption number for compressed samples (COAN) was determined according to ASTM D3493-18.

pH was measured according to D1512-15b, Test Method B - Sonic Slurry.

The volatiles content was determined using a thermogravimetric instrument of Fa. LECO Instrumente GmbH (TGA-701) according to the following protocol: Pans were dried at 650°C for 30 min. The carbon black materials were stored in a desiccator equipped with desiccant prior to measurements. Baked-out pans were loaded in the instrument, tared and filled with between 0.5 g to 10 g carbon black material. Then, the oven of the TGA instrument loaded with the sample-filled pans was gradually heated up to 105°C by automated software control and the samples were dried until a constant mass was achieved. Subsequently, the pans were closed by lids, the oven was purged with nitrogen (99.9 vol% grade) and heated up to 950°C. The oven temperature was kept at 950°C for 7 min. The content of volatiles at 950°C was calculated using the following equation: $Volatiles = \frac{m \left(prior to heating\right) - m \left(after 7 minutes@950°C\right)}{m \left(prior to heating\right)} ⋅ 100 % .$

Carboxylic acid groups per unit mass carbon black were determined according to the following protocol: The carbon black was dried overnight in a compartment drier set at a temperature of 125°C. The hot carbon black material was removed from the drier and allowed to cool down in a desiccator containing a desiccant. In three thoroughly cleaned and dried Erlenmeyer flasks each *m_{CB}*=1.5±0.1 g carbon black material were weighed and to each 25 mL 0.05 molar aqueous sodium hydroxide solution (Titrisol grade diluted in bi-distilled water) were added. Air inside the flasks was replaced by nitrogen gas and flasks were sealed by plugs additionally secured by taping with parafilm. Flasks were placed in a shaker overnight at 240 rpm. After that, the resulting suspensions were pressure filtered using nitrogen gas at a pressure of 5 bar. Of each filtrate 10 mL were transferred in a beaker. 10 mL of 0.025 molar sulfuric acid (Titrisol grade diluted in bi-distilled water) were added to each beaker and carbonate was removed by boiling up for a short time. Subsequently, the samples were titrated back to pH 6.5 using 0.05 molar sodium hydroxide solution (Titrisol grade diluted in bi-distilled water). The required volume of sodium hydroxide solution *V_{NaOH}* was determined in mL at a precision of three digits behind the comma. Two blanks were measured and the required volumes of sodium hydroxide solution were averaged (*V_{blank,averaged}*). The concentration of carboxyl groups in µmol/g was calculated for all three samples using the following formula and the resulting values were averaged. $\left[Carboxyl groups\right] = 25 ⋅ \frac{{V}_{NaOH} - {V}_{blank , averaged}}{10 ⋅ {m}_{CB}} ⋅ 0.05 ⋅ 1000$

### Examples 1-6

### Preparation of vulcanizable rubber compositions

Rubber compositions of the formulations set forth in Table 2 were prepared according to the following procedure using the afore-mentioned oxidized and reference carbon blacks with no or different amounts of bis(4-aminophenyl) disulfide as amino-functional aromatic polysulfide compound.

The preparation was performed using a 3-step mixing procedure. Each mixing step was conducted in an internal mixer with intermeshing rotor geometry (GK 1.5 E) followed by further mixing on an open two-roll mill (two roll laboratory mill for rubber from Troester GmbH & Co. KG). The fill factor of the internal mixer was 0.68.

In the first step, the rubber component was added to the mixing chamber of the internal mixer and was plasticized for 60 seconds. After that half of the carbon black filler, and all of the amino-functional polysulfide compound, if used, was added and mixed for 75 seconds before the other half of the carbon black was added and mixed for 45 seconds. The ram was lifted and cleaned followed by additional 90 seconds of mixing. The chamber temperature was 60°C and the rotor speed was 45 rpm during the whole first mixing step. It was secured that the maximum temperature of the mixture did not reach more than 160°C during this step. After in total 4:30 min of mixing the compound was transferred from the internal mixer to the open mill, where it was further processed at a roll temperature of 40°C with the front roll of the open mill operated at 23 rpm and the back roll operated at 34 rpm.

After storing for at least 16 h, the mixture was then subjected to the second mixing step. Herein, the mixture was mixed in the internal mixer for 6 min. The chamber temperature was 60°C. The rotor speed was initially 55 rpm and subsequently adjusted to keep the temperature of the mixture between 140°C and 160°C. Subsequently, the compound was transferred to the open mill and processed therein as described above for the first mixing step.

After another storage time of at least 16 h, the mixture was subjected to the third mixing step. ZnO, stearic acid, sulfur, TBBS-80 and DPG-80 were added to the mixture while the internal mixer was operated with a chamber temperature of 40°C and a rotor speed of 34 rpm and mixed for 2 minutes such that a vulcanizable rubber composition was obtained. The temperature of the mixture was herein between 85°C and 105°C. Again, this mixing stage was finalized by mixing on the open mill under conditions as described above for the first mixing step, where sheets for further processing and vulcanization were thus formed.

**Table 2**

| **Ingredient** (amounts in parts by weight elastomer, phr) | **Ex. 1*** | **Ex. 2*** | **Ex. 3*** | **Ex. 4** | **Ex. 5** | **Ex. 6** |
|---|---|---|---|---|---|---|
| Natural rubber¹ | 100 | 100 | 100 | 100 | 100 | 100 |
| Reference CB | 55 | 55 | - | - | - | - |
| Oxidized CB | - | - | 55 | 55 | 55 | 55 |
| bis(4-aminophenyl) disulfide ² | - | 3 | - | 1.5 | 3 | 6 |
| ZnO | 3 | 3 | 3 | 3 | 3 | 3 |
| Stearic acid | 1.5 | 1.5 | 1.5 | 1.5 | 1.5 | 1.5 |
| Rhenogran TBBS-80³ | 1.7 | 1.7 | 1.7 | 1.7 | 1.7 | 1.7 |
| Rhenogran DPG-80⁴ | 1.25 | 1.25 | 1.25 | 1.25 | 1.25 | 1.25 |
| Sulfur | 1.5 | 1.5 | 1.5 | 1.5 | 1.5 | 1.5 |
| Cure time (@145°C) | 15 min | 40 min | 12 min | 10 min | 15 min | 30 min |

| | | | | | | |
|---|---|---|---|---|---|---|
| ¹: SVR 10, pre-masticated to 67 +/- 3 MU. ML(1+4) 100 °C, commercially available from WEBER & SCHAER GmbH & Co. KG ²: bis(4-aminophenyl) disulfide, commercially available from Sigma-Aldrich Chemie GmbH ³: Accelerator, commercially available from Rhein Chemie Additives ⁴: Accelerator, commercially available from Rhein Chemie Additives *: Reference Example | | | | | | |

### Curing of the vulcanizable rubber compositions

The prepared vulcanizable rubber compositions according to Table 2 were subjected to curing in a cure press a temperature of 145°C. The applied pressure was 130 bar. A moving die rheometer Alpha Technologies Rheometer MDR 2000 was used to measure the torque as a function of the time at the used curing temperature of 145°C for the different investigated vulcanizable rubber compositions. The vulcanizable rubber compositions were cured in the cure press for a time, which allowed sufficient curing according to the respective measured torque-time curve to ensure essentially full cure. The respective cure time is included in Table 2 above.

### Characterization of the cured rubber compositions

Hardness was measured according to DIN 53 505.

Tensile strength, elongation at break and Modulus 100 and Modulus 300 were measured according to DIN 53 504.

Ball rebound was measured according to a test method based on ASTM 3574 and DIN ISO 8307 carried out as follows: A cylindrical test sample with 35 mm in diameter and 19 mm in height was heated up to 60±0.2°C. It was assured that the circular areas of the test sample were smooth and parallel to each other. A steel ball with a diameter of 19 mm was allowed to fall from a drop height of 500 mm through a falling tube on one of the circular areas of the test sample. The height corresponds to the distance between the lowest point of the steel ball and the point of impact on the test sample. The time interval between the first and the second impact of the steel ball on the test sample was measured by a light barrier located closely above the point of impact on the test sample. The time resolution of the light barrier was 10⁻⁴ s. The time intervals measured in five runs per test sample were averaged and were applied to calculate the rebound height. The rebound height was then again utilized to calculate the ball rebound, which corresponds to the percental ratio of the rebound height to the drop height.

Heat build-up was tested according to DIN 53533 applying a pre-tension of 1 MPa and a stroke of 4.45 mm. The chamber temperature is 55 °C.

Loss factor tan δ was measured according to DIN 53 513 in strain-controlled mode (0.2 ± 0.1 mm) on a cylindrical specimen (10 mm in height and 10 mm in diameter) at 60°C with a frequency of 16 Hz.

Bound rubber was measured according to the following procedure: A rubber sample of about 0.2 g was cut in small pieces, weighed using an analytical balance and placed in a wire basket (320-mesh, stainless, 22 mm diameter, 40 mm in height) filled with glass wool in such a way that the sample did not come in contact with the wire basket. The sample-containing basket was placed in a 100 mL flask with screw cap and 50-60 mL toluene (analytical grade) were added to result in a minimum filling level of 20 mm above the bottom of the flask. The flask was allowed to stand for 7 days at a temperature of 23±2°C, whereby the flask was swirled every morning and evening. The toluene was replaced after 1 to 3 days. After the 7 days, the basket with the bound rubber gel therein was removed from the flask and allowed to emit the solvent overnight in a fume hood. Subsequently, the sample was dried overnight in a compartment drier until mass was constant. After allowing to cool down to room temperature in a desiccator, the sample was weighed (m(dried gel)). The portion of bound rubber in weight-% based on the mass of the original sample was calculated using the following formula: $Bound Rubber = \frac{{m}_{dried gel} - {m}_{filler , original sample}}{{m}_{polymer , original sample}} ⋅ 100 %$ It was assumed that the mass of the carbon black filler in the gel is the same as the mass of the carbon black filler in the original sample (m(filler,original sample)).

Abrasion resistance was investigated by determining the abrasion loss of each vulcanized rubber composition using a laboratory abrasion and skid tester (LAT100 from VMI Holland BV) based on the procedure according to ISO23233:2016, adapted as described in the following: The samples for abrasion resistance testing are in a form of a solid cured rubber wheel, with 19 mm thickness, external and internal diameter of 84 and 35 mm, respectively. The wheel is mounted on a brass sleeve and installed in the LAT100 instrument. Two specimen wheels per rubber composition were used to conduct the evaluation. Before the test, all wheels are preconditioned according to the preconditioning settings in the Table 3. After the first preconditioning, the samples are turned and preconditioned again. Testing was then carried out using the test conditions specified in Table 3 below in increasing numerical order. The test order of the samples for each condition (Abrasion run) is herein as follows: The first wheel of the first rubber composition tested begins, followed by the first wheel of the second rubber composition tested, and so on, ending with the first wheel of the last rubber composition tested. After that the first wheels are turned and the wheels are tested again under the same testing condition, but this time in the opposite order starting with the first wheel of the last rubber composition tested, and finishing with the first wheel of the first composition. This procedure is repeated with the second set of wheels and after that the next condition (Abrasion run according to Table 3) is applied. Each condition is thus applied four times on each tested rubber composition (first wheel original direction and turned, and second wheel original direction and turned).

**Table 3**

| Abrasion run | Preconditio ning | 1 | 2 | 3 | 4 | 5 | 6 | 7 | 8 | 9 |
|---|---|---|---|---|---|---|---|---|---|---|
| Load [N] | 75 | 75 | 75 | 75 | 75 | 75 | 75 | 75 | 75 | 75 |
| Speed [km/h] | 25 | 25 | 25 | 25 | 12 | 12 | 12 | 2.5 | 2.5 | 2.5 |
| Slip angle [°] | 5.5 | 21 | 16 | 9 | 21 | 16 | 9 | 21 | 16 | 9 |
| Distance [m] | 500 | 15 0 | 250 | 600 | 150 | 250 | 600 | 150 | 250 | 600 |
| Powder feed rate [units] | 10 | 25 | 18 | 12 | 16 | 12 | 7 | 9 | 10 | 2 |

By weighing the wheels before and after each Abrasion run, the abrasion losses were determined. An average abrasion loss was then calculated for each tested vulcanized rubber composition, expressed as an abrasion resistance index calculated as follows relative to a selected reference Example, which is set equal to 100%: 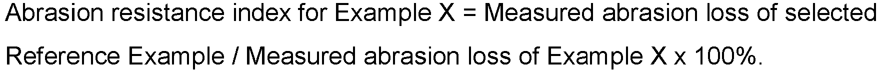 Abrasion resistance index for Example X = Measured abrasion loss of selected Reference Example / Measured abrasion loss of Example X x 100%. This calculation is done for each of the nine conditions set forth in Table 3. The arithmetic average of the thus calculated Abrasion resistance index of all nine conditions is reported for each tested rubber composition in Tables 4, 6 and 8.
A greater abrasion resistance index indicates better abrasion resistance.

For the rubber compositions according to Examples 1-6 the thus obtained results are summarized in Table 4.

The results of Table 4 indicate that rubber articles with significantly improved hysteresis properties, as evidenced by a reduced loss factor tan δ, reduced heat-build up, increased ball rebound and/or increased bound rubber, and at the same time significantly improved abrasion resistance can be obtained without substantially degrading the mechanical properties by the use of a functionalized carbon black according to the present invention obtained by treating an oxidized carbon black with an amino-functional aromatic polysulfide compound (Examples 4-6), as compared to a corresponding non-oxidized reference carbon black as such (Reference Example 1) or treated with an amino-functional aromatic polysulfide compound (Reference Example 2) or use of a respective oxidized carbon black that has not been functionalized with the amino-functional aromatic polysulfide compound (Reference Example 3). Particularly favorable properties are obtained when relatively low amounts of the functionalizing agent are used (cf. Examples 4 and 5, and in particular Example 5), with an optimum between 1.5 and 6 phr, such as in particular about 3 phr (cf. Example 5).

**Table 4**

| **Property** | **Ex. 1*** | **Ex. 2*** | **Ex. 3*** | **Ex. 4** | **Ex. 5** | **Ex. 6** |
|---|---|---|---|---|---|---|
| Hardness [Shore A] | 71 | 71 | 66 | 63 | 64 | 70 |
| Tensile strength [MPa] | 24 | 23.8 | 22.6 | 18.7 | 21.2 | 24.2 |
| Elongation at break [%] | 350 | 410 | 330 | 260 | 280 | 400 |
| Modulus 100 [MPa] | 4 | 3.1 | 3.2 | 3.5 | 3.8 | 3.4 |
| Modulus 300 [MPa] | 20.3 | 16.5 | 19.9 | n/a | 21.6 | 17.8 |
| tan δ 0.2±0.1 mm, 60 °C, 16 Hz | 0.181 | 0.232 | 0.082 | 0.064 | 0.069 | 0.145 |
| Heat build-up [°C] | 69 | 80 | 61 | 51 | 49 | 74 |
| Ball rebound, 60°C [%] | 62.5 | 55 | 71.3 | 74.2 | 75.4 | 63.3 |
| Bound rubber [%] | 52.4 | 55.5 | 69.8 | 77.9 | 80.1 | 72.3 |
| Abrasion resistance index [%] | 100 | 101 | 92 | 102 | 117 | 106 |

| | | | | | | |
|---|---|---|---|---|---|---|
| *: Reference Example | | | | | | |

### Examples 7-9

Further vulcanizable rubber compositions of the formulations set forth below in Table 5 were prepared using the afore-mentioned oxidized carbon black treated with bis(4-aminophenyl) disulfide as an amino-functional aromatic polysulfide compound in accordance with the present invention (Example 7) in comparison to treated with an equimolar amount of cystamine dihydrochloride as an aliphatic amino-functional sulfur-containing functionalizing agent used in the prior art, without (Reference Example 8) or with (Reference Example 9) addition of basic auxiliary ingredients.

The compositions according to Examples 7-9 were prepared using the 3-step mixing procedure described above with respect to Examples 1-6, wherein where applicable cystamine dihydrochloride was used instead of bis(4-aminophenyl) disulfide, added together with or without Ca(OH)₂ and MgO to the natural rubber component in the first mixing step. Additionally, used anti-oxidant (Vulkanox 4020) was added to the mixture with the other additives introduced in the third mixing step.

**Table 5**

| **Ingredient** (amounts in parts by weight elastomer, phr) | **Ex. 7** | **Ex. 8*** | **Ex. 9*** |
|---|---|---|---|
| Natural rubber¹ | 100 | 100 | 100 |
| Oxidized CB | 55 | 55 | 55 |
| bis(4-aminophenyl) disulfide ² | 3 | - | - |
| Cystamine⁵ | | 2.7 | 2.7 |
| Elastomag 170⁶ | | | 1 |
| Innovox OH⁷ | | | 1 |
| Vulkanox 4020⁸ | 1 | 1 | 1 |
| ZnO | 3 | 3 | 3 |
| Stearic acid | 1.5 | 1.5 | 1.5 |
| Rhenogran TBBS-80³ | 1.7 | 1.7 | 1.7 |
| Rhenogran DPG-80⁴ | 1.25 | 1.25 | 1.25 |
| Sulfur | 1.5 | 1.5 | 1.5 |
| Cure time (@145°C) | 15 min | 15 min | 15 min |

| | | | |
|---|---|---|---|
| ¹: SVR 10, pre-masticated to 67 +/- 3 MU. ML(1+4) 100 °C, commercially available from WEBER & SCHAER GmbH & Co. KG ²: bis(4-aminophenyl) disulfide, commercially available from Sigma-Aldrich Chemie GmbH ³: Accelerator, commercially available from Rhein Chemie Additives ⁴: Accelerator, commercially available from Rhein Chemie Additives ⁵: Cystamine (as dihydrochloride), commercially available from Sigma-Aldrich Chemie GmbH ⁶: Magnesium oxide, commercially available from Nordmann, Rassmann GmbH ⁷: Calcium hydroxide, commercially available from Nordmann, Rassmann GmbH ⁸: Anti-oxidant (6PPD), commercially available from LANXESS Deutschland GmbH *: Reference Example | | | |

The prepared vulcanizable rubber compositions of Examples 7-9 were cured at a temperature of 145°C as indicated above for Examples 1-6. The curing time was 15 min each. The cured rubber compositions were analyzed as described above for Examples 1-6. The thus obtained results are summarized in Table 6.

**Table 6**

| **Property** | **Ex. 7** | **Ex. 8*** | **Ex. 9*** |
|---|---|---|---|
| Hardness [Shore A] | 68 | 70 | 69 |
| Tensile strength [MPa] | 18.1 | 23.1 | 22.3 |
| Elongation at break [%] | 240 | 300 | 330 |
| Modulus 100 [MPa] | 4.6 | 4.4 | 3.6 |
| Modulus 300 [MPa] | 13.9 | 13.6 | 11.1 |
| tan δ | 0.066 | 0.068 | 0.073 |
| 0.2±0.1 mm, 60 °C, 16 Hz | | | |
| Heat build-up [°C] | 51 | 60 | 58 |
| Ball rebound, 60°C [%] | 72.8 | 72.2 | 72.6 |
| Bound rubber [%] | 79 | 69 | 61 |
| Abrasion resistance index [%] | 115 | 100 | 78 |

| | | | |
|---|---|---|---|
| *: Reference Example | | | |

The result in Table 6 show that the functionalized carbon black according to the present invention obtained by treating an oxidized carbon black with an amino-functional aromatic polysulfide compound (Example 7) demonstrates not only significantly improved hysteresis properties, as evidenced by a reduced loss factor tan δ, reduced heat-build up, increased ball rebound and/or increased bound rubber, at least comparable to oxidized carbon black functionalized with cystamine, but is further significantly more effective in improving abrasion resistance. Furthermore, use of basic auxiliary ingredients such as MgO and Ca(OH)₂ which are often employed to neutralize acid functionality introduced by adducts of amine-functional agents such as cystamine dihydrochloride in the preparation of curable rubber compounds and which may adversely affect the properties of cured rubber compositions (as evidenced by Reference Example 9 versus Reference Example 8) can be avoided.

### Examples 10-12

Further vulcanizable rubber compositions of the formulations set forth below in Table 7 were prepared using different amino-functional aromatic polysulfide compounds for functionalization of the afore-mentioned oxidized carbon black, as compared to use of the non-oxidized reference carbon black. The compositions according to Examples 10-12 were prepared using the 3-step mixing procedure described above with respect to Examples 1-6, wherein additionally used anti-oxidant (Vulkanox 4020) was added to the mixture with the other additives introduced in the third mixing.

**Table 7**

| **Ingredient** (amounts in parts by weight elastomer, phr) | **Ex. 10*** | **Ex. 11** | **Ex. 12** |
|---|---|---|---|
| Natural rubber¹ | 100 | 100 | 100 |
| Reference CB | 55 | | |
| Oxidized CB | - | 55 | 55 |
| bis(4-aminophenyl) disulfide² | - | 3 | - |
| bis(2-aminophenyl) disulfide ⁹ | - | - | 3 |
| Vulkanox 4020⁸ | 1 | 1 | 1 |
| ZnO | 3 | 3 | 3 |
| Stearic acid | 1.5 | 1.5 | 1.5 |
| Rhenogran TBBS-80³ | 1.7 | 1.7 | 1.7 |
| Rhenogran DPG-80⁴ | - | 1.25 | 1.25 |
| Sulfur | 1.5 | 1.5 | 1.5 |
| Cure time (@145°C) | 15 min | 12 min | 12 min |

| | | | |
|---|---|---|---|
| ¹: SVR 10, pre-masticated to 67 +/- 3 MU. ML(1+4) 100 °C, commercially available from WEBER & SCHAER GmbH & Co. KG ²: bis(4-aminophenyl) disulfide, commercially available from Sigma-Aldrich Chemie GmbH ³: Accelerator, commercially available from Rhein Chemie Additives ⁴: Accelerator, commercially available from Rhein Chemie Additives ⁸: Antioxidant (6PPD), commercially available from LANXESS Deutschland GmbH ⁹: bis(2-aminophenyl) disulfide, commercially available from Sigma-Aldrich Chemie GmbH *: Reference Example | | | |

The prepared vulcanizable rubber compositions of Examples 10-12 were cured at a temperature of 145°C as indicated above for Examples 1-6 for the curing times indicated in Table 7. The cured rubber compositions were analyzed as described above for Examples 1-6. The thus obtained results are summarized in Table 8.

**Table 8**

| **Property** | **Ex. 10*** | **Ex. 11** | **Ex. 12** |
|---|---|---|---|
| Hardness [Shore A] | 68 | 64 | 64 |
| Tensile strength [MPa] | 26.7 | 22.7 | 22.7 |
| Elongation at break [%] | 410 | 300 | 290 |
| Modulus 100 [MPa] | 3.7 | 4.0 | 4.0 |
| Modulus 300 [MPa] | 19.7 | 23.0 | 23.3 |
| tan δ | 0.170 | 0.065 | 0.066 |
| 0.2±0.1 mm, 60 °C, 16 Hz | | | |
| Heat build-up [°C] | 67 | 48 | 48 |
| Ball rebound, 60°C [%] | 64.8 | 75.1 | 75.0 |
| Bound rubber [%] | 52.5 | 79.1 | 85.6 |
| Abrasion resistance index [%] | 100 | 128 | 129 |

| | | | |
|---|---|---|---|
| *: Reference Example | | | |

The results in Table 8 illustrate that functionalized carbon blacks according to the present invention prepared utilizing the different amino-functional aromatic polysulfide compounds yield comparable properties when incorporated in rubber compositions, notably enabling to achieve at the same time significantly improved hysteresis properties and abrasion resistance compared to use of conventional rubber reinforcing carbon blacks. The functionalized carbon blacks according to the present invention are therefore particularly suitable for applications where reduced hysteresis properties and high abrasion resistance are desirable.

## Claims

1. A functionalized carbon black obtained by treating an oxidized carbon black comprising carboxylic acid groups in an amount of at least 50 µmol/g with an amino-functional aromatic polysulfide compound.

2. The functionalized carbon black according to claim 1, wherein a residue of the amino-functional aromatic polysulfide compound is bound to the oxidized carbon black by a covalent bond, such as an amide bond.

3. The functionalized carbon black according to any one of claims 1 or 2, wherein the amino-functional aromatic polysulfide compound is a monomeric organic compound and/or has a molecular weight of less than 500 g/mol, such as 300 g/mol or less or 250 g/mol or less.

4. The functionalized carbon black according to any one of the preceding claims, wherein the amino-functional aromatic polysulfide compound comprises three or less than three, such as one or two, amino groups per molecule and/or wherein the amino-functionality of the amino-functional aromatic polysulfide compound is provided by one or more amine groups each individually selected from primary amine groups and secondary amine groups.

5. The functionalized carbon black according to any one of the preceding claims, wherein the amino-functional aromatic polysulfide compound comprises a polysulfide moiety and one or more aromatic organic group(s) bound to the polysulfide moiety, wherein at least one of the aromatic organic group(s) has one or more amino group(s).

6. The functionalized carbon black according to any one of the preceding claims, wherein the amino-functional aromatic polysulfide compound has a structure corresponding to the following formula (I)
R¹-Sₓ-R² (I)
wherein x is an integer of at least 2, such as in a range from 2 to 10, and R¹ and R² are each individually selected from hydrogen and substituted or unsubstituted hydrocarbyl, such as C₁-C₂₀ hydrocarbyl, wherein at least one of R¹ and R² comprises substituted or unsubstituted aryl, such as C₆-C₂₀ aryl, and wherein at least one of R¹ and R² comprises one or more amino substituent(s).

7. The functionalized carbon black according to claim 6, wherein R¹ and R² are each individually selected from substituted or unsubstituted aryl, such as C₆-C₂₀ aryl, and wherein at least one of R¹ and R² comprises one or more amino substituent(s), preferably wherein both of R¹ and R² each comprise one or more amino substituent(s), such as a primary and/or secondary amine group.

8. The functionalized carbon black according to claim 6 or 7, wherein x is an integer in the range of 2 to 4, preferably 2, and R¹ and R² are each individually C₆-C₂₀ aryl, such as C₆-C₁₂ aryl, preferably phenyl, substituted by one or more, such as one, amino group, wherein preferably the amino-functional aromatic polysulfide compound comprises bis(2-aminophenyl) disulfide, bis(3-aminophenyl) disulfide, bis(4-aminophenyl) disulfide, or a mixture or combination of any of the foregoing.

9. The functionalized carbon black according to any one of the preceding claims, wherein the oxidized carbon black comprises carboxylic acid groups in an amount of at least 100 µmol/g, such as in a range from 100-500 µmol/g, and/or has a volatile content determined by thermogravimetry at a temperature of 950°C of at least 2 wt.%, preferably from 4 wt.% to 10 wt. %, based on the total weight of the oxidized carbon black.

10. A process for preparing a functionalized carbon black comprising:
(A) providing an oxidized carbon black comprising carboxylic acid groups in an amount of at least 50 µmol/g,
(B) contacting the oxidized carbon black with an amino-functional aromatic polysulfide compound, and
(A) subjecting the resulting mixture to conditions at which the oxidized carbon black reacts with the amino-functional aromatic polysulfide compound.

11. The process according to claim 10, wherein step (C) comprises heating the mixture to a temperature of at least 100°C, such as 100°C-160°C, for a period of at least 1 min, such as 2-10 min.

12. A vulcanizable rubber composition comprising:
(i) a vulcanizable rubber component,
(ii) an oxidized carbon black comprising carboxylic acid groups in an amount of at least 50 µmol/g, and
(iii) an amino-functional aromatic polysulfide compound;
or comprising the vulcanizable rubber component (i) and a functionalized carbon black formed from the oxidized carbon black (ii) and the amino-functional aromatic polysulfide compound (iii).

13. The vulcanizable rubber composition according to claim 12, wherein the oxidized carbon black or the functionalized carbon black derived therefrom is present in an amount of 10 to 100 phr and/or wherein the amino-functional aromatic polysulfide compound is used in an amount of 0.1 to 20 phr, preferably 0.5 to 10 phr, such as 1 to 6 phr, more preferably 2 to 5 phr.

14. A process for preparing a vulcanizable rubber composition comprising
contacting an oxidized carbon black comprising carboxylic acid groups in an amount of at least 50 µmol/g with an amino-functional aromatic polysulfide compound, and
subjecting the resulting mixture to conditions at which the oxidized carbon black reacts with the amino-functional aromatic polysulfide compound to form a functionalized carbon black;
wherein a vulcanizable rubber component is mixed with the oxidized subjecting the mixture to conditions at which the oxidized carbon black reacts with the amino-functional aromatic polysulfide compound.

15. An article prepared from a vulcanizable rubber composition according to any one of claims 12 or 13, such as a tire, a tire component such as a tire tread, a cable sheath, a tube, a drive belt, a conveyor belt, a roll covering, a shoe sole, a sealing member, a profile or a damping element.

## Patentansprüche

1. Ein funktionalisierter Ruß, erhalten durch Behandeln eines oxidierten Rußes umfassend Carbonsäuregruppen in einer Menge von wenigstens 50 µmol/g mit einer aminofunktionellen aromatischen Polysulfidverbindung.

2. Der funktionalisierte Ruß gemäß Anspruch 1, wobei ein Rest von der aminofunktionellen aromatischen Polysulfidverbindung durch eine kovalente Bindung, wie etwa eine Amidbindung, an den oxidierten Ruß gebunden ist.

3. Der funktionalisierte Ruß gemäß irgendeinem der Ansprüche 1 oder 2, wobei die aminofunktionelle aromatische Polysulfidverbindung eine monomere organische Verbindung ist und/oder ein Molekulargewicht von weniger als 500 g/mol, wie etwa 300 g/mol oder weniger oder 250 g/mol oder weniger aufweist.

4. Der funktionalisierte Ruß gemäß irgendeinem der vorhergehenden Ansprüche, wobei die aminofunktionelle aromatische Polysulfidverbindung drei oder weniger als drei, wie etwa eine oder zwei, Aminogruppen pro Molekül umfasst und/oder wobei die Aminofunktionalität der aminofunktionellen aromatischen Polysulfidverbindung durch eine oder mehrere Aminogruppen jeweils individuell ausgewählt aus primären Aminogruppen und sekundären Aminogruppen bereitgestellt wird.

5. Der funktionalisierte Ruß gemäß irgendeinem der vorhergehenden Ansprüche, wobei die aminofunktionelle aromatische Polysulfidverbindung eine Polysulfidstruktureinheit und eine oder mehrere aromatische organische Gruppe(n), die an die Polysulfidstruktureinheit gebunden ist/sind, umfasst, wobei wenigstens eine der aromatischen organischen Gruppe(n) eine oder mehrere Aminogruppe(n) aufweist.

6. Der funktionalisierte Ruß gemäß irgendeinem der vorhergehenden Ansprüche, wobei die aminofunktionelle aromatische Polysulfidverbindung eine Struktur entsprechend der folgenden Formel (I) aufweist
R¹-Sₓ-R² (I)
wobei x eine ganze Zahl von wenigstens 2, wie etwa im Bereich von 2 bis 10, ist, und R¹ und R² jeweils individuell aus Wasserstoff und substituiertem oder unsubstituiertem Kohlenwasserstoffrest, wie etwa C₁-C₂₀-Kohlenwasserstoffrest, ausgewählt sind, wobei wenigstens eines von R¹ und R² substituiertes oder unsubstituiertes Aryl, wie etwa C₆-C₂₀-Aryl, umfasst, und wobei wenigstens eines von R¹ und R² einen oder mehrere Aminosubstituenten umfasst.

7. Der funktionalisierte Ruß gemäß Anspruch 6, wobei R¹ und R² jeweils individuell aus substituiertem oder unsubstituiertem Aryl, wie etwa C₆-C₂₀-Aryl ausgewählt sind, und wobei wenigstens eines von R¹ und R² einen oder mehrere Aminosubstituenten umfasst, wobei vorzugsweise beide von R¹ und R² jeweils einen oder mehrere Aminosubstituenten, wie etwa eine primäre und/oder sekundäre Aminogruppe, aufweisen.

8. Der funktionalisierte Ruß gemäß Anspruch 6 oder 7, wobei x eine ganze Zahl im Bereich von 2 bis 4, vorzugsweise 2, ist und R¹ und R² jeweils individuell C₆-C₂₀-Aryl, wie etwa C₆-C₁₂-Aryl, vorzugsweise Phenyl, substituiert mit einer oder mehreren, wie etwa einer Aminogruppe, sind, wobei vorzugsweise die aminofunktionelle aromatische Polysulfidverbindung Bis(2-aminophenyl)disulfid, Bis(3-aminophenyl)disulfid, Bis(4-aminophenyl)disulfid oder eine Mischung oder Kombination von irgendwelchen der Vorstehenden umfasst.

9. Der funktionalisierte Ruß gemäß irgendeinem der vorhergehenden Ansprüche, wobei der oxidierte Ruß Carbonsäuregruppen in einer Menge von wenigstens 100 µmol/g, wie etwa im Bereich von 100 bis 500 µmol/g umfasst, und/oder einen Flüchtigengehalt, bestimmt durch Thermogravimetrie bei einer Temperatur von 950 °C, von wenigstens 2 Gew.-%, vorzugsweise von 4 Gew.-% bis 10 Gew.-%, basierend auf dem Gesamtgewicht des oxidierten Rußes, aufweist.

10. Ein Verfahren zum Herstellen eines funktionalisierten Rußes umfassend:
(A) Bereitstellen eines oxidierten Rußes umfassend Carbonsäuregruppen in einer Menge von wenigstens 50 µmol/g,
(B) In-Kontakt-Bringen des oxidierten Rußes mit einer aminofunktionellen aromatischen Polysulfidverbindung, und
(C) Aussetzen der resultierenden Mischung gegenüber Bedingungen, bei welchen der oxidierte Ruß mit der aminofunktionellen aromatischen Polysulfidverbindung reagiert.

11. Das Verfahren gemäß Anspruch 10, wobei der Schritt (C) ein Erhitzen der Mischung auf eine Temperatur von wenigstens 100 °C, wie etwa 100 °C bis 160 °C, für eine Dauer von wenigstens 1 Minute, wie etwa 2 bis 10 Minuten, umfasst.

12. Eine vulkanisierbare Kautschukzusammensetzung umfassend:
(i) eine vulkanisierbare Kautschukkomponente,
(ii) einen oxidierten Ruß umfassend Carbonsäuregruppen in einer Menge von wenigstens 50 µmol/g, und
(iii) eine aminofunktionelle aromatische Polysulfidverbindung,
oder umfassend die vulkanisierbare Kautschukkomponente (i) und einen funktionalisierten Ruß, der aus dem oxidierten Ruß (ii) und der aminofunktionellen aromatischen Polysulfidverbindung (iii) gebildet wurde.

13. Die vulkanisierbare Kautschukzusammensetzung gemäß Anspruch 12, wobei der oxidierte Ruß oder der davon abgeleitete funktionalisierte Ruß in einer Menge von 10 bis 100 phr vorhanden ist und/oder wobei die aminofunktionelle aromatische Polysulfidverbindung in einer Menge von 0,1 bis 20 phr, vorzugsweise 0,5 bis 10 phr, wie etwa 1 bis 6 phr, weiter bevorzugt 2 bis 5 phr, verwendet wird.

14. Ein Verfahren zum Herstellen einer vulkanisierbaren Kautschukzusammensetzung umfassend:
In-Kontakt-Bringen eines oxidierten Rußes umfassend Carbonsäuregruppen in einer Menge von wenigstens 50 µmol/g mit einer aminofunktionellen aromatischen Polysulfidverbindung, und
Aussetzen der resultierenden Mischung gegenüber Bedingungen, bei welchen der oxidierende Ruß mit der aminofunktionellen aromatischen Polysulfidverbindung reagiert, um einen funktionalisierten Ruß zu bilden, wobei eine vulkanisierbare Kautschukkomponente mit dem oxidierten Ruß und der aminofunktionellen aromatischen Polysulfidverbindung oder der davon abgeleitete funktionalisierte Ruß vor, während und/oder nach dem Aussetzen der Mischung gegenüber Bedingungen, bei welchen der oxidierte Ruß mit der aminofunktionellen aromatischen Polysulfidverbindung reagiert, gemischt wird.

15. Ein Gegenstand, hergestellt aus einer vulkanisierbaren Kautschukzusammensetzung gemäß irgendeinem der Ansprüche 12 oder 13, wie etwa ein Reifen, eine Reifenkomponente, wie etwa eine Reifenlauffläche, eine Kabelummantelung, ein Schlauch, ein Antriebsband, ein Förderband, eine Rollenbedeckung, eine Schuhsohle, ein Dichtelement, ein Profil oder ein Dämpfungselement.

## Revendications

1. Noir de carbone fonctionnalisé, obtenu par traitement d'un noir de carbone oxydé comprenant des groupes acide carboxylique en une quantité d'au moins 50 µmoles/g par un composé polysulfure aromatique à fonctionnalité amino.

2. Noir de carbone fonctionnalisé selon la revendication 1, dans lequel un résidu du composé polysulfure aromatique à fonctionnalité amino est lié au noir de carbone oxydé par une liaison covalente, telle qu'une liaison amide.

3. Noir de carbone fonctionnalisé selon l'une quelconque des revendications 1 et 2, dans lequel le composé polysulfure aromatique à fonctionnalité amino est un composé organique monomère et/ou présente une masse moléculaire inférieure à 500 g/mole, telle que 300 g/mole ou moins ou 250 g/mole ou moins.

4. Noir de carbone fonctionnalisé selon l'une quelconque des revendications précédentes, dans lequel le composé polysulfure aromatique à fonctionnalité amino comprend trois ou moins de trois, comme un ou deux, groupes amino par molécule et/ou dans lequel la fonctionnalité amino du composé polysulfure aromatique à fonctionnalité amino est fournie par un ou plusieurs groupes amino choisis chacun individuellement parmi les groupes amino primaires et les groupes amino secondaires.

5. Noir de carbone fonctionnalisé selon l'une quelconque des revendications précédentes, dans lequel le composé polysulfure aromatique à fonctionnalité amino comprend un fragment polysulfure et un ou plusieurs groupe(s) organique(s) aromatique(s) lié(s) au fragment polysulfure, au moins l'un des groupes organiques aromatiques comportant un ou plusieurs groupe(s) amino.

6. Noir de carbone fonctionnalisé selon l'une quelconque des revendications précédentes, dans lequel le composé polysulfure aromatique à fonctionnalité amino a une structure correspondant à la formule (I) suivante
R¹-Sₓ-R² (I)
dans laquelle x est un nombre entier valant au moins 2, tel que situé dans une plage de 2 à 10, et R¹ et R² sont choisis chacun individuellement parmi un atome d'hydrogène et un groupe hydrocarbyle, tel qu'un groupe hydrocarbyle en C₁-C₂₀, substitué ou non substitué, au moins l'un des radicaux R¹ et R² comprenant un groupe aryle, tel qu'un groupe aryle en C₆-C₂₀, substitué ou non substitué, et au moins l'un des radicaux R¹ et R² portant un ou plusieurs substituant(s) amino.

7. Noir de carbone fonctionnalisé selon la revendication 6, dans lequel R¹ et R² sont choisis chacun individuellement parmi les groupes aryle, tels que les groupes aryle en C₆-C₂₀, substitués ou non substitués, et dans lequel au moins l'un des radicaux R¹ et R² porte un ou plusieurs substituant(s) amino, de préférence dans lequel les deux radicaux R¹ et R² portent chacun un ou plusieurs substituant(s) amino, tels qu'un groupe amino primaire et/ou un groupe amino secondaire.

8. Noir de carbone fonctionnalisé selon la revendication 6 ou 7, dans lequel x est un nombre entier situé dans la plage de 2 à 4, de préférence valant 2, et R¹ et R² sont chacun individuellement un groupe aryle en C₆-C₂₀, tel qu'un groupe aryle en C₆-C₁₂, de préférence un groupe phényle, substitué par un ou plusieurs, notamment un, groupe(s) amino, dans lequel le composé polysulfure aromatique à fonctionnalité amino comprend de préférence le disulfure de bis(2-aminophényle), le disulfure de bis(3-aminophényle), le disulfure de bis(4-aminophényle), ou un mélange ou une association de quelconques composés parmi les précédents.

9. Noir de carbone fonctionnalisé selon l'une quelconque des revendications précédentes, dans lequel le noir de carbone oxydé comprend des groupes acide carboxylique en une quantité d'au moins 100 µmoles/g, telle que située dans la plage de 100 à 500 µmoles/g, et/ou a une teneur en substances volatiles, déterminée par thermogravimétrie à une température de 950 °C, d'au moins 2 % en poids, de préférence de 4 % en poids à 10 % en poids, par rapport au poids total du noir de carbone oxydé.

10. Procédé de préparation d'un noir de carbone fonctionnalisé, comprenant les étapes consistant à :
(A) mettre à disposition un noir de carbone oxydé comprenant des groupes acide carboxylique en une quantité d'au moins 50 µmoles/g,
(B) mettre le noir de carbone oxydé en contact avec un composé polysulfure aromatique à fonctionnalité amino, et
(C) soumettre le mélange résultant à des conditions dans lesquelles le noir de carbone oxydé réagit avec le composé polysulfure aromatique à fonctionnalité amino.

11. Procédé selon la revendication 10, dans lequel l'étape (C) comprend chauffer le mélange jusqu'à une température d'au moins 100 °C, telle que de 100 °C-160 °C, pendant une durée d'au moins 1 minute, telle que de 2-10 minutes.

12. Composition de caoutchouc vulcanisable comprenant :
(i) un composant caoutchouc vulcanisable,
(ii) un noir de carbone oxydé comprenant des groupes acide carboxylique en une quantité d'au moins 50 µmoles/g, et
(iii) un composé polysulfure aromatique à fonctionnalité amino ;
ou comprenant le composant caoutchouc vulcanisable (i) et un noir de carbone fonctionnalisé formé à partir du noir de carbone oxydé (ii) et du composé polysulfure aromatique à fonctionnalité amino (iii).

13. Composition de caoutchouc vulcanisable selon la revendication 12, dans laquelle le noir de carbone oxydé ou le noir de carbone fonctionnalisé qui en est dérivé est présent en une quantité de 10 à 100 phr et/ou dans laquelle le composé polysulfure aromatique à fonctionnalité amino est utilisé en une quantité de 0,1 à 20 phr, de préférence 0,5 à 10 phr, telle que 1 à 6 phr, plus préférablement 2 à 5 phr.

14. Procédé de préparation d'une composition de caoutchouc vulcanisable, comprenant les étapes consistant à
mettre un noir de carbone oxydé, comportant des groupes acide carboxylique en une quantité d'au moins 50 µmoles/g, en contact avec un composé polysulfure aromatique à fonctionnalité amino, et
soumettre le mélange résultant à des conditions dans lesquelles le noir de carbone oxydé réagit avec le composé polysulfure aromatique à fonctionnalité amino, pour former un noir de carbone fonctionnalisé ;
dans lequel un composant caoutchouc vulcanisable est mélangé avec le noir de carbone oxydé et le composé polysulfure aromatique à fonctionnalité amino, ou le noir de carbone fonctionnalisé qui en est dérivé, avant, pendant et/ou après la soumission du mélange à des conditions dans lesquelles le noir de carbone oxydé réagit avec le composé polysulfure aromatique à fonctionnalité amino.

15. Article fabriqué à partir d'une composition de caoutchouc vulcanisable selon l'une quelconque des revendications 12 et 13, tel qu'un pneumatique, un composant de pneumatique tel qu'une bande de roulement, une gaine de câble, une chambre à air, une courroie de transmission, une bande transporteuse, un revêtement de rouleau, une semelle de chaussure, un élément d'étanchéité, un profilé ou un élément d'amortissement.
